(19) Europäisches Patentamt
European Patent Office
Office européen des brevets

(11) **EP 2 196 665 A2**

(12) **EUROPÄISCHE PATENTANMELDUNG**

(43) Veröffentlichungstag:
 **16.06.2010  Patentblatt 2010/24**

(51) Int Cl.:
 *F03D 1/06* *(2006.01)*

(21) Anmeldenummer: **09175497.8**

(22) Anmeldetag: **10.11.2009**

(84) Benannte Vertragsstaaten:
 **AT BE BG CH CY CZ DE DK EE ES FI FR GB GR HR HU IE IS IT LI LT LU LV MC MK MT NL NO PL PT RO SE SI SK SM TR**
 Benannte Erstreckungsstaaten:
 **AL BA RS**

(30) Priorität: **15.12.2008   DE 102008061838**

(71) Anmelder: **REpower Systems AG**
 **22297 Hamburg (DE)**

(72) Erfinder:
 • **Korjahn geb. Schubert, Christoph Matthias**
  **24358, Bistensee (DE)**

• **Gollnick, Bert**
 **24790, Schacht-Audorf (DE)**
• **Petsche, Marc**
 **24809, Nübbel (DE)**
• **Zeller, Lenz Simon**
 **24114, Kiel (DE)**
• **Windbichler, Ralph**
 **24782, Büdelsdorf (DE)**

(74) Vertreter: **Seemann, Ralph**
 **Seemann & Partner,**
 **Ballindamm 3**
 **20095 Hamburg (DE)**

(54) **Rotorblatt einer Windenergieanlage mit einem Turbulator**

(57)   Die Erfindung betrifft ein Rotorblatt (1) einer Windenergieanlage mit einem Turbulator (6), der sich im Wesentlichen entlang einer Längsachse (21) des Rotorblatts (1) und auf einer Außenfläche (2, 3) des Rotorblatts (1) erstreckt. Die Erfindung zeichnet sich **dadurch** aus, dass der Turbulator (6) in Richtung (22) quer zur Längsachse (21) eine ungleichförmige Höhe (h) aufweist.

Die Erfindung betrifft ferner die Verwendung einer entsprechenden Beschichtung (11-15) als Turbulator auf einem Rotorblatt (1) einer Windenergieanlage.

Fig. 1

EP 2 196 665 A2

**Beschreibung**

Die Erfindung betrifft ein Rotorblatt einer Windenergieanlage mit einem Turbulator, der sich im Wesentlichen entlang einer Längsachse des Rotorblatts und auf einer Außenfläche des Rotorblatts erstreckt.

Rotorblätter mit Turbulatoren sind an sich bekannt. Ein Turbulator dient dazu, eine an den Flächen oder einer Fläche des Rotorblatts anliegende laminare Luftströmung in eine turbulente Luftströmung zu wandeln. Dieses hat zum einen den Vorteil, dass bei gewissen Profilen auch für verschiedene Anströmwinkel des Windes ein gleichförmiger Auftriebsbeiwert erzielt wird, da das Bilden einer Ablöseblase vermieden wird. Turbulatoren haben ferner den Effekt, die durch laminare Luftströmung umströmte Rotorblätter erzeugten Geräusche zu verringern.

Aus WO 95/19500 A1 ist ein Rotorblatt mit einer flexiblen Hinterkante aus beispielsweise einem dünnen Elastomerstreifen oder einem gewebten Band bekannt. Diese Maßnahme verringert die Geräusche des Rotorblatts.

Es ist Aufgabe der vorliegenden Erfindung, ein Rotorblatt einer Windenergieanlage mit einem Turbulator, der sich im Wesentlichen entlang einer Längsachse und auf einer Außenfläche des Rotorblatts erstreckt, anzugeben, das eine alternative Lösung zum Stand der Technik angibt, um insbesondere die Geräuschbildung am Rotorblatt zu verringern. Insbesondere soll eine Lösung angegeben werden, mittels der die Standzeit des Turbulators erhöht wird.

Gelöst wird diese Aufgabe durch ein Rotorblatt einer Windenergieanlage mit einem Turbulator, der sich im Wesentlichen entlang einer Längsachse des Rotorblatts und auf einer Außenfläche des Rotorblatts erstreckt, wobei der Turbulator in Richtung quer zur Längsachse eine ungleichförmige Höhe aufweist.

Durch die ungleichförmige Höhe in Richtung quer zur Längsachse des Rotorblatts, also vorzugsweise in Strömungsrichtung der um das Rotorblatt anliegenden Luftströmung ist ein sehr effizienter Turbulator gegeben, der insbesondere bei verschiedenen Windgeschwindigkeiten effizient laminare Luftströmung in turbulente Luftströmung ändert. Hierbei ist im Rahmen der Erfindung unter Höhe insbesondere die Erstreckung des Turbulators senkrecht zur Oberfläche eines ansonsten glatten Profils bzw. der glatten Oberfläche des Rotorblatts zu verstehen. Im Rahmen der Erfindung wird unter einer ungleichförmigen Höhe in eine Richtung eine sich ändernde Höhe in dieser Richtung verstanden. Eine ungleichförmige Höhe bedeutet im Rahmen der Erfindung, dass nicht wie im Stand der Technik ein aufgeklebtes Gewebeband mit einer vorgegebenen Höhe von beispielsweise 0,4mm vorgesehen ist, sondern der erfindungsgemäße Turbulator Bereiche aufweist, die eine maximale Höhe haben, und Bereiche vorliegen, die eine minimale Höhe haben, wobei das Verhältnis zwischen der maximalen Höhe zur minimalen Höhe zwischen zwei und zwanzig liegen kann.

Der Turbulator weist vorzugsweise eine stochastische Rauigkeit bzw. Höhenverteilung auf.

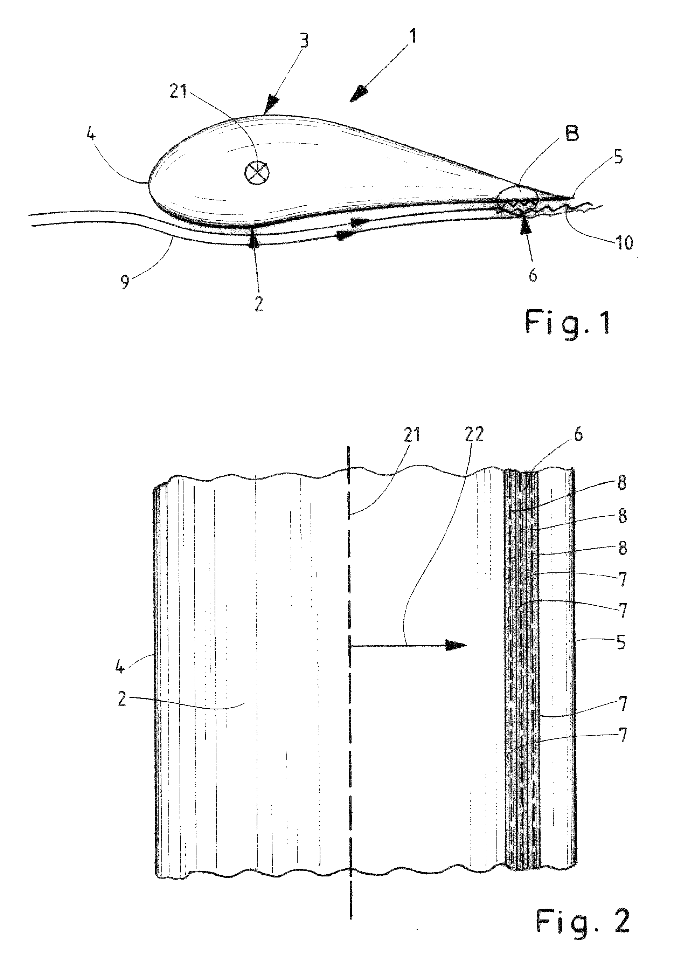

Vorzugsweise weist der Turbulator in Richtung quer zur Längsachse wenigstens abschnittsweise eine regelmäßige ungleichförmige Höhe auf. Vorzugsweise weist der Turbulator in Richtung quer zur Längsachse eine definierte Breite auf, die zwischen 1mm und 50mm, insbesondere 2mm und 30mm, insbesondere zwischen 5mm und 10mm, liegt. Unter regelmäßig ungleichförmige Höhe ist insbesondere im Rahmen der Erfindung eine regelmäßig sich ändernde Höhe gemeint. So können beispielsweise wie unter Bezugnahme auf die Figuren 1 bis 3 näher beschrieben, geometrisch definierte Strukturen als Turbulator dienen.

Die geometrischen Strukturen können sich im Wesentlichen entlang einer Längsachse des Rotorblatts erstrecken, beispielsweise im Wesentlichen parallel zu einer Längsachse sein und in einem Schnitt quer zur Längsachse, wie dieses beispielsweise in Fig. 1 dargestellt ist, in Richtung quer zur Längsachse beispielsweise entlang der Oberfläche des Rotorblatts in Richtung der Hinterkante eine Struktur aufweisen, die sich in Richtung der Hinterkante regelmäßig von der Höhe her ändert. So können beispielsweise wie in Fig. 1 drei dreieckförmige Schnitte vorgesehen sein. Es können allerdings auch andere geometrische regelmäßige Figuren als Turbulator dienen.

Vorzugsweise weist der Turbulator wenigstens eine Vertiefung auf, die im Wesentlichen entlang oder parallel zu einer Längsachse des Rotorblatts angeordnet ist. Unter Vertiefung wird im Rahmen der Erfindung insbesondere eine Riefe, eine Nut oder ein Tal verstanden.

Wenn der Turbulator vorzugsweise eine Beschichtung mit hochstehenden Spitzen und/oder wenigstens einer hochstehenden Kante umfasst, ist ein besonders einfach herzustellender Turbulator gegeben. Die Beschichtung ist vorzugsweise unlösbar mit der Oberfläche des Rotorblatts verbunden, beispielsweise durch einen aufgebrachten Lack oder eine aufgebrachte Folie bzw. aufgebrachtes Klebeband, das derart aufgeklebt ist, dass dieses nur zerstört bzw. beschädigt von dem Rotorblatt wieder entfernt werden kann.

Vorzugsweise sind die hochstehenden Spitzen durch in die Beschichtung eingebrachte Rauigkeiten hervorgerufen. Unter Rauigkeiten wird im Rahmen der Erfindung insbesondere das Vorsehen von Sand- oder Glaskörnern mit einer vorgebbaren Größenverteilung bzw. einer vorgebbaren Größencharge bzw. Fraktion angesehen. Unter einer Rauigkeit im Rahmen der Erfindung wird auch eine Mineralkörnung verstanden.

Vorzugsweise umfasst die Beschichtung eine Lackschicht, eine Polymerschicht, eine Kunststoffschicht und/oder ein Klebeband. Die Kunststoffschicht kann beispielsweise eine Spachtelmasse sein, die entsprechend moduliert ist. Hierbei kann es sich um ein Polyesterharz oder ein Epoxidharz mit entsprechendem Härter handeln, also beispielsweise eine Zweikomponenten-Spachtelmasse. Die Beschichtung kann mit Mineralkörnung, mit Sandkörnern oder Glaskörnern bzw. Quarzkörnern versehen sein.

Das Klebeband kann beispielsweise ein Klebeband mit rutschhemmender Mineralkörnung sein, wobei die rutschhemmende Mineralkörnung eingebettet ist in ein zähes, dauerhaftes Polymer und fest verbunden mit einer Weichaluminiumträgerfolie. Ein derartiges Klebeband ist unter den Artikelnummern AM2201 bis AM 2206 beispielsweise von der Firma 3M Commercial Care Laboratory Europe, 3M France-Eurotech, 95250 Beauchamp, Frankreich, erhältlich. Dieses Klebeband dient an sich dazu, eine Rutschgefahr in von Menschen begangenen Flächen zu vermeiden.

Die Beschichtung kann auch eine Spachtelmasse sein oder ein Klebstoff. Die Beschichtung kann beispielsweise durch Auftragen mit einer Rolle hergestellt werden, die eine Struktur in sich aufweist, so dass Bereiche aufgetragen werden, die eine größere Höhe aufweisen als weitere Bereiche, die eine niedrigere Höhe aufweisen. Hierdurch ist dann eine entsprechende Strukturierung möglich, mittels der in Richtung quer zur Längsachse des Rotorblatts eine ungleichförmige Höhe erzeugt wird.

Vorzugsweise liegt die Höhe zwischen 2 % und 30 %, insbesondere zwischen 5 % und 15 % einer örtlichen laminaren Trennschichtdicke, die bei wenigstens teilweise laminarer Umströmung des Rotorblatts entsteht. Bei diesen Werten kann es sich um die maximale Höhe handeln. Vorzugsweise wird die Höhe, insbesondere die maximale Höhe auf die örtliche Reynoldszahl abgestimmt. Insbesondere vorzugsweise ist die maximale Höhe auf eine sich aus der örtlichen Reynoldszahl ergebenden kritischen Rauigkeit unter Berücksichtigung der unterschiedlichen Arbeitsbereiche des Rotorblatts abgestimmt.

Die laminare Grenzschichtdicke kann in einer ersten Nährung für eine ebene Platte anstelle eines Profils eines Rotorblattes nach der Formel von Blasius wie folgt bestimmt werden

$$\delta = 5 * \sqrt{\frac{\gamma x}{V_A}}$$

(Formel 1)

Dies entspricht

$$\delta = 5x * \sqrt{\frac{1}{R}}$$

(Formel 2)

Hierbei ist $\delta$ die laminare Grenzschichtdicke, $\gamma$ die kinematische Viskosität der Luft, x die Position an der Stelle, an der die laminare Grenzschichtdicke bestimmt werden soll, in Bezug auf die Lauflänge über das Profil bzw. in der ersten Nährung über ebene Platte von der Nase bis zum Ende des Profils, $V_A$ die Anströmgeschwindigkeit und R die Reynoldszahl.

Vorzugsweise liegt die, insbesondere maximale, Höhe zwischen 0,1 mm und 2mm, insbesondere zwischen 0,2mm und 1,5mm, insbesondere zwischen 0,3mm und 1 mm. Die Höhe hängt hierbei von der Strömungsgeschwindigkeit der Luftströmung ab und insbesondere auch von der Reynoldszahl. Sie muss ausreichend groß sein, um am Turbulator den Umschlag von einer laminaren Luftströmung zu einer turbulenten Luftströmung zu erzielen. Die Höhe darf allerdings nicht zu hoch sein, um nicht die Gleitzahl des Rotorblatts zu sehr zu erniedrigen. Die Höhe kann in den Einbuchtungen bzw. in den niedrigsten bzw. minimalen Höhen der Beschichtung bzw. des Turbulators in die Nähe von 0mm kommen. Vorzugsweise ist die Dicke bzw. Höhe des Turbulators an den tiefsten Stellen, also bei den minimalen Höhen, allerdings größer als 0,05mm, insbesondere größer als 0,1mm, insbesondere größer als 0,2mm. Vorzugsweise liegt die größte maximale Höhe des Turbulators bei ca. 0,8mm.

Ferner vorzugsweise ist der Turbulator auf der Druckseite des Rotorblatts angeordnet und dort bei 4/5 der Tiefe des Profils von der Nase aus gerechnet.

Vorzugsweise gilt die Höhe für eine Reynoldszahl zwischen $2 \times 10^6$ bis $5 \times 10^6$, insbesondere bei $3 \times 10^6$.

Erfindungsgemäß wird eine Beschichtung auf einem Rotorblatt einer Windenergieanlage als Turbulator verwendet, wobei die Beschichtung in Richtung quer zu einer Längsachse des Rotorblatts eine ungleichförmige Höhe aufweist. Vorzugsweise ist der Turbulator entsprechend wie vorstehend beschrieben ausgestaltet.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen.

Es zeigen:

Fig. 1     eine schematische Darstellung eines Schnitts bzw. eines Profil eines Rotorblatts,

Fig. 2     eine schematische Draufsicht auf die Druckseite des Rotorblatts aus Fig. 1,

Fig. 3     eine schematische vergrößerte Darstellung des Bereichs B aus Fig. 1,

Fig. 4 eine schematische Darstellung eines weiteren Turbulators in einer Schnittdarstellung,

Fig. 5 eine weitere schematische Darstellung eines weiteren Turbulators in einer Schnittdarstellung,

Fig. 6 eine weitere schematische Schnittdarstellung eines weiteren Turbulators,

Fig. 7 eine schematische Draufsicht auf einen weiteren erfindungsgemäßen Turbulator, und

Fig.8 eine schematische Schnittdarstellung entlang des Schnitts A-A der Fig. 7.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

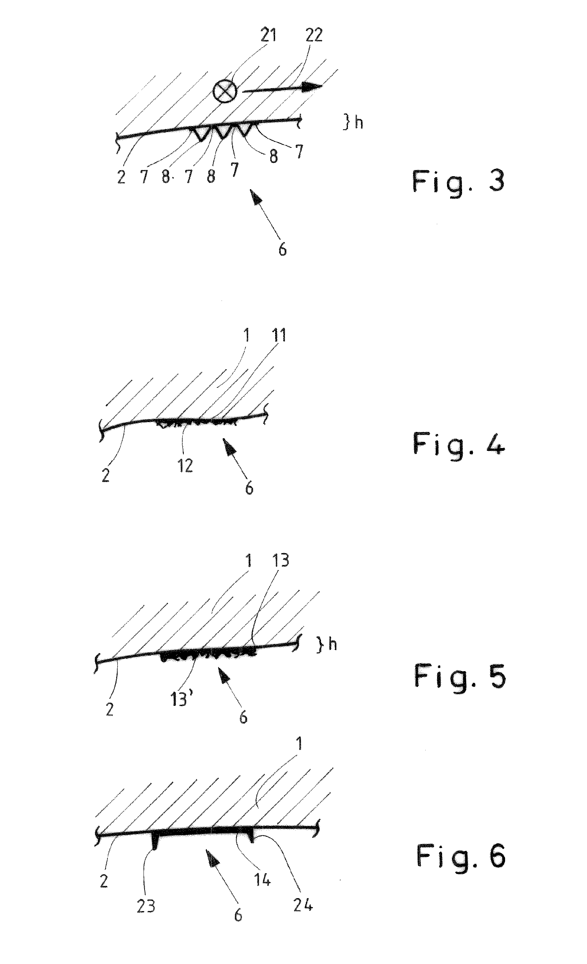

Fig. 1 zeigt einen Schnitt durch ein Rotorblatt 1 in einer schematischen Darstellung. Es ist somit ein Profil eines Rotorblatts 1 dargestellt. Das Rotorblatt 1 weist eine Druckseite 2 und eine Saugseite 3 auf. Es ist eine Nase 4 vorgesehen und eine Hinterkante 5. Schematisch ist eine laminare Luftströmung 9 auf der Unterseite bzw. Druckseite 2 des Rotorblatts 1 dargestellt. Im Bereich der Hinterkante 5 bzw. in diesem Ausführungsbeispiel bei ca. 90% gerechnet von der Nase 4 an der Unterseite bzw. Druckseite 2 des Rotorblatts 1 ist ein Turbulator 6 vorgesehen. Der Turbulator 6 dient dazu, die laminare Strömung 9 in eine turbulente Strömung 10 umzuwandeln. In Fig. 1 ist auch ein Bereich B dargestellt, der in Fig. 3 dann schematisch vergrößert dargestellt ist.
Fig. 2 zeigt einen Ausschnitt auf ein Rotorblatt in Draufsicht auf die Druckseite 2. Dort ist auch wie entsprechend in Fig. 1 eine Längsachse 21 des Rotorblatts 1 dargestellt. Eine parallel hierzu verschobene Längsachse 21 entspricht auch einer Längsachse gemäß der Erfindung. Der Turbulator 6 ist entsprechend genauer dargestellt. Es handelt sich hierbei um drei nebeneinander angeordnete Dreiecke mit Tälern 7 und Spitzen 8. Anstelle der Spitzen 8 kann auch hier der Begriff Bergrücken bzw. Erhebung dienen. Die Täler 7 und die Spitzen 8 sind im Wesentlichen entlang einer Längsachse angeordnet. In diesem Fall im Wesentlichen parallel zur Längsachse 21, also entlang der Längsachse 21. Damit ist in Richtung 22 quer zur Längsachse 21 bzw. in diesem Fall im Wesentlichen senkrecht zur Längsachse 21 eine Struktur als Turbulator 6 vorgesehen, die zunächst eine kleine Erhöhung bei 7 aufweist von beispielsweise 0,1mm, um sich dann kontinuierlich bzw. regelmäßig bis zur Spitze 8 auf beispielsweise 0,5mm zu erhöhen, um sich dann wieder kontinuierlich bzw. regelmäßig zu verringern bis 7 auf 0,1mm, um dann wieder die Höhe zu vergrößern bis 8 auf beispielsweise 0,5mm. Anschließend wird die Höhe noch einmal verringert bis 7, einmal erhöht bis 8 und noch einmal verringert bis 7.
Dieses ist auch in Fig. 3 noch einmal schematisch genauer dargestellt, bei der eine vergrößerte Darstellung des Bereichs B aus Fig. 1 zu sehen ist. Hier ist die Höhe h auch noch einmal schematisch dargestellt. Es wird beispielsweise eine minimale Höhe von 0,1mm des Turbulators bei 7 oberhalb von der Oberfläche der Druckseite 2 erreicht und eine Höhe von beispielsweise 0,5mm oder 1 mm bei 8.
Ein derartiger Turbulator kann beispielsweise dadurch hergestellt werden, dass eine Spachtelmasse entsprechend einer Dicke bzw. Höhe von 1 mm oder höher im Bereich des Turbulators 6 aufgebracht wird. Bei der Spachtelmasse kann es sich um Zweikomponentenspachtelmasse wie Epoxidharz mit einem Härter oder Polyesterharz mit einem Härter handeln. Hierdurch wird eine feste Verbindung zur Oberfläche der Druckseite 2 erzeugt. Vor dem Abbinden wird dann ein Spachtel im Bereich des Turbulators im Wesentlichen entlang der Längsachse 21 gezogen, wobei der Spachtel eine Negativkontur aufweist, die zu dem aufgebrachten Turbulator in den Figuren 1 bis 3 entsprechend formkomplementär passt. Es werden so entsprechende Aussparungen erzeugt, die die Kontur des Turbulators aufweisen, die im Schnitt in den Figuren 1 und 3 dargestellt sind.
Fig. 4 zeigt eine schematische Darstellung eines weiteren Turbulators im Schnitt. Hierbei ist eine Lackschicht 11 aufgetragen auf die Blattoberfläche der Druckseite 2. Der Lack wurde mit einer Rauigkeit bzw. Körnung 12 versetzt. Hierbei handelt es sich beispielsweise um Sandkörner oder Glaskörner einer vorgebbaren Größe. Es kann beispielsweise eine Korngröße von 0,2mm bis 0,8mm, insbesondere vorzugsweise von 0,4mm bis 0,6mm vorgesehen sein. Die Ausdehnung des Turbulators in Richtung quer bzw. im Wesentlichen senkrecht zur Längsachse des Rotorblatts und auf der Oberfläche des Rotorblatts, also die Dicke des Turbulators, ist im Bereich von 1 mm bis 50mm, insbesondere vorzugsweise 2mm bis 30mm.
In Fig. 5 ist schematisch eine weitere Schnittdarstellung durch ein Rotorblatt 1 im Bereich eines Turbulators 6 dargestellt, wobei der Turbulator eine Klebefolie 13 oder ein Klebeband mit einer Mineralkörnung 13' umfasst. Die Klebefolie 13 kann die vorstehend schon beschriebene Klebefolie von 3M sein und dient üblicherweise als Anti-Rutsch-Beschichtung. In diesem Fall dient diese Klebefolie allerdings als Turbulator eines Rotorblatts einer Windenergieanlage. Das Klebeband oder die Klebefolie der Firma 3M hat beispielsweise eine Höhe von max. 1,5mm.
Fig. 6 zeigt eine weitere schematische Schnittdarstellung eines Teils eines Rotorblatts mit einem Turbulator 6. Hierbei handelt es sich um einen Turbulator, der als zäher Lack mit einer Schablone aufgebracht wird. Beim Entfernen der Schablone vor dem endgültigen Aushärten der Lackschicht 14 bilden sich hochstehende scharfe Kanten 23 und 24 an den Schablonenrändern.

Die scharfen Kanten 23 und 24 stören die Grenzschicht einer Luftströmung, die entlang dieses Turbulators strömt und führt zu einem Kippen einer laminaren Strömung in eine turbulente Strömung.

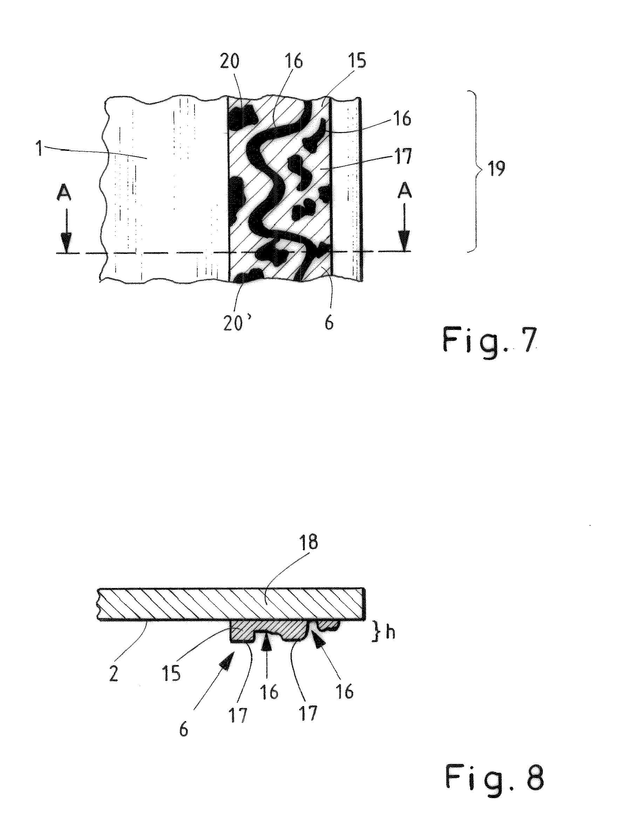

Fig. 7 zeigt eine schematische Draufsicht eines Ausschnitts aus einem Rotorblatt 1 mit einem Turbulator 6, der beispielsweise aus einer beispielsweise ungefähr 0,5mm dicken Schicht eines zähen bzw. angedickten Lackes besteht und mit einer ca. 10mm bis 20mm breiten Strukturrolle aufgebracht wurde. Die Strukturrolle mit einem Umfang, die der Größe 19 in Fig. 7 entspricht, ist so ausgestaltet, dass die Rolle selbst Erhebungen und tieferliegende Schichten aufweist, so dass im Bereich der Erhebungen der Rolle tieferliegende Strukturen 20, 20' bzw. Täler 16 entstehen, die im Turbulator 6 ansonsten tiefer liegen als die Berge bzw. Erhebungen 17. Die Erhebungen 17 haben hierbei ungefähr die gleiche Höhe h. Nach einem Umlauf der Strukturrolle wiederholt sich dann das entsprechende Strukturmuster, wie durch die Strukturen 20, 20' erkennbar ist.

In Fig. 8 ist ein Schnitt entlang der Linie A-A der Fig. 7 in schematischer Darstellung gezeigt. Es ist eine Wandung 18 des Rotorblatts 1 dargestellt und an dieser Wandung 18 ist auf der Druckseite 2 ein Turbulator 6 angeordnet, der aus Spachtelmasse 15 besteht. Es sind entsprechende Erhebungen 17 und Täler 16 dargestellt, die der Negativform der Strukturrolle, mittels der diese Struktur aufgebracht wurde, entspricht. Die maximale Höhe beträgt hierbei ungefähr 0,5mm. Es können allerdings auch andere Dicken vorgesehen sein.

Der Turbulator 6 kann auch auf der Saugseite 3 des Rotorblatts 1 angeordnet sein. Vorzugsweise ist dieser dann bei einer Tiefenrücklage von 30 % bis 60 % anzuordnen. Der Turbulator 6 erstreckt sich auf der Saugseite 3 auch entlang der Längsachse 21 des Rotorblatts 1 und weist entsprechende erfindungsgemäße Merkmale auf.

Bezuaszeichenliste

| 1 | Rotorblatt |
|---|---|
| 2 | Druckseite |
| 3 | Saugseite |
| 4 | Nase |
| 5 | Hinterkante |
| 6 | Turbulator |
| 7 | Tal |
| 8 | Spitze |
| 9 | laminare Luftströmung |
| 10 | turbulente Luftströmung |
| 11 | Lackschicht |
| 12 | Körnung |
| 13 | Klebefolie mit Mineralkörnung |
| 13' | Mineralkörnung |
| 14 | Lackschicht |
| 15 | Spachtelmasse |
| 16 | Tal |
| 17 | Berg |
| 18 | Wandung |
| 19 | Umfang |
| 20, 20' | Struktur |
| 21 | Längsachse |
| 22 | Richtung quer zur Längsachse |
| 23 | Kante |
| 24 | Kante |
| h | Höhe |

**Patentansprüche**

1. Rotorblatt (1) einer Windenergieanlage mit einem Turbulator (6), der sich im Wesentlichen entlang einer Längsachse (21) des Rotorblatts (1) und auf einer Außenfläche (2, 3) des Rotorblatts (1) erstreckt, **dadurch gekennzeichnet, dass** der Turbulator (6) in Richtung (22) quer zur Längsachse (21) eine ungleichförmige Höhe (h) aufweist.

2. Rotorblatt (1) nach Anspruch 1, **dadurch gekennzeichnet, dass** der Turbulator (6) in Richtung (22) quer zur Längsachse (21) wenigstens abschnittsweise eine regelmäßige ungleichförmige Höhe (h) aufweist.

3. Rotorblatt (1) nach Anspruch 1 oder 2, **dadurch gekennzeichnet, dass** der Turbulator (6) wenigstens eine Vertiefung (7) aufweist, die im Wesentlichen entlang einer Längsachse (21) des Rotorblatts (1) angeordnet ist.

4. Rotorblatt (1) nach einem der Ansprüche 1 bis 3, **dadurch gekennzeichnet, dass** der Turbulator (6) eine Beschichtung (11, 12, 13, 14, 15) mit hochstehenden Spitzen (8, 12, 13') und/oder wenigstens einer hochstehenden Kante (23, 24) umfasst.

5. Rotorblatt (1) nach Anspruch 4, **dadurch gekennzeichnet, dass** die hochstehenden Spitzen (8, 12, 13') durch in die Beschichtung (11, 12, 13, 14, 15) eingebrachte Rauigkeiten (12, 13') hervorgerufen sind.

6. Rotorblatt (1) nach Anspruch 4 oder 5, **dadurch gekennzeichnet, dass** die Beschichtung (11-15) eine Lackschicht, eine Polymerschicht, eine Kunststoffschicht und/oder ein Klebeband umfasst.

7. Rotorblatt (1) nach einem der Ansprüche 1 bis 6, **dadurch gekennzeichnet, dass** die Höhe (h) zwischen 2 % und 30 %, insbesondere zwischen 5 % und 15 %, einer örtlichen laminaren Grenzschichtdicke ist.

8. Rotorblatt (1) nach einem der Ansprüche 1 bis 7, **dadurch gekennzeichnet, dass** die Höhe (h) zwischen 0,1 mm und 2mm, insbesondere zwischen 0,2mm und 1,5mm, insbesondere zwischen 0,3mm und 1 mm, liegt.

9. Rotorblatt (1) nach einem der Ansprüche 1 bis 8, **dadurch gekennzeichnet, dass** der Turbulator (6) auf der Druckseite (2) des Rotorblatts (1) angeordnet ist.

10. Rotorblatt (1) nach Anspruch 8 oder 9, **dadurch gekennzeichnet, dass** die Höhe (h) für eine Reynoldszahl von $1,5 \times 10^6$ bis $10 \times 10^6$, insbesondere von $2,5 \times 10^6$ bis $6 \times 10^6$, insbesondere von $3 \times 10^6$, gilt.

11. Verwendung einer Beschichtung (11-15) als Turbulator (6) auf einem Rotorblatt (1) einer Windenergieanlage, wobei die Beschichtung (11-15) in Richtung (22) quer zu einer Längsachse (21) des Rotorblatts (1) eine ungleichförmige Höhe (h) aufweist.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9519500 A1